# EUROPEAN PATENT APPLICATION

(11) **EP 1 847 423 A2**
(43) Date of publication of application: **24.10.2007**
(21) Application number: 07008025.4
(22) Date of filing: 19.04.2007
(51) Int. Cl.: B60R 22/00

(54) **Seatbelt device and vehicle**

(30) Priority: 21.04.2006 JP 2006117435
(71) Applicant: Toyota Jidosha Kabushihi Kaisha, Aichi-ken Toyota-shi 471-8571 (JP)
(72) Inventor: Okada, Naoki, Toyota-shi Aichi-ken 471-8571 (JP)
(74) Representative: Kuhnen & Wacker

(57) **Abstract**

With this seatbelt device (26), a lap belt portion (26B) is provided at a seatbelt between a first shoulder belt portion (26A) and a second shoulder belt portion (26C). The seatbelt between the first shoulder belt portion and the lap belt portion is supported by a lap outer anchor (34) via a tongue (32). The seatbelt between the second shoulder belt portion and the lap belt portion is supported by a lap inner anchor (36). For this reason, the lap belt portion is worn at the lumbar region of the passenger with certainty. Due to this, the capability of restraining the lumbar region of the passenger can be increased using a simple configuration.

## Description

### BACKGROUND OF THE INVENTION

### Field of the Invention

The present invention relates to a seatbelt device where a seatbelt is worn at a passenger of a vehicle, and to a vehicle provided with the seatbelt device.

### Description of the Related Art

For seatbelt devices, there are devices where two seatbelts (i.e., webbing) are arranged at both sides of a seat in the widthwise direction of a vehicle, and these are respectively supported at the upper portion of the vehicle and the lower portion of the vehicle (e.g., see Official Gazette of JP-A No. 6-255445).

With this type of seatbelt device, the two seatbelts are worn at a passenger by linking to each other in front of the torso of the passenger. For this reason, the configuration is such that it is difficult for the two seatbelts to be worn at the lumbar region of the passenger. Due to this, it is necessary to add a seatbelt worn between the left and right of the lumbar region of the passenger in order to increase the seatbelt device's ability to restrain the lumbar region of the passenger. Accordingly, the configuration becomes complicated.

### SUMMARY OF THE INVENTION

The present invention was made in light of the above-described circumstances, and seeks to provide a seatbelt device and a vehicle that, with a simple configuration, can increase the restraining capability with regard to the lumbar region of a passenger.

A seatbelt device according to a first aspect of the present invention comprises: a first shoulder belt portion that is provided at a seatbelt worn at a passenger seated in a seat of a vehicle and which is worn from a shoulder region of a first side of the passenger to a second side of a lumbar region of the passenger; a second shoulder belt portion that is provided at the seatbelt and which is worn from the shoulder region of the second side of the passenger to the first side of the lumbar region of the passenger; a lap belt portion that is provided at the seatbelt between the first shoulder belt portion and the second shoulder belt portion and which is worn at the lumbar region of the passenger from the first side to the second side; and a pair of lap anchors that support the seatbelt between the first shoulder belt portion and the lap belt portion and between the second shoulder belt portion and the lap belt portion.

With the seatbelt device of the first aspect of the present invention, the seatbelt is worn at the passenger seated in the seat of the vehicle. The first shoulder belt potion of the seatbelt is worn from the shoulder region of the first side of the passenger to the second side of the lumbar region of the passenger. The second shoulder belt potion of the seatbelt is worn from the shoulder region of the second side of the passenger to the first side of the lumbar region of the passenger. The lap belt potion of the seatbelt is worn at the lumbar region of the passenger from the first side to the second side.

Here, the lap belt portion is provided at the seatbelt between the first shoulder belt portion and the second shoulder belt portion. Furthermore, the pair of lap anchors support the seatbelt between the first shoulder belt portion and the lap belt portion and between the second shoulder belt portion and the lap belt portion. For this reason, the lap belt portion is worn at the lumbar region of the passenger with certainty. Due to this, the restraining capability with regard to the lumbar region of the passenger can be increased with a simple configuration.

A seatbelt device according to a second aspect of the present invention comprises the seatbelt device according to the first aspect of the present invention, wherein the support of the seatbelt by at least one of the pair of lap anchors is releasable.

With the seatbelt device according to the second aspect of the present invention, the support of the seatbelt by the at least one of the pair of lap anchors is releasable. For this reason, the passenger can easily get in and out of the seat.

A seatbelt device according to a third aspect of the present invention comprises the seatbelt device according to the first or second aspect of the present invention, wherein a pretensioner is provided at at least one of one end side of the seatbelt and the lap anchor at another end side of the seatbelt, such that the tension of the seatbelt can be increased.

With the seatbelt device according to the third aspect of the present invention, the pretensioner provided at the at least one of the one end side of the seatbelt and the lap anchor at the another end side of the seatbelt is configured such that the tension of the seatbelt can be increased. Accordingly, the ability to restrain the passenger is increased. This is especially the case when the pretensioner is provided at the one end side of the seatbelt and at the lap anchor at the another end side of the seatbelt. Here, the tension of the seatbelt can be made to effectively increase across all of the first shoulder belt portion, the second shoulder belt portion, and the lap belt portion. For this reason, the ability to restrain the passenger can be effectively increased.

A seatbelt device according to a fourth aspect of the present invention comprises the seatbelt device according to any one of the first through third aspects of the present invention, wherein at least one of one end side of the seatbelt and another end side of the seatbelt is movable towards a position forward of a position at which the seatbelt is worn at the passenger.

With the seatbelt device according to the fourth aspect of the present invention, the at least one of the one end side of the seatbelt and the another end side of the seatbelt can move towards the position forward of the position at which the seatbelt is worn at the passenger. For this reason, it is easy for the passenger to get in and out of the seat.

The seatbelt device of the fifth aspect of the present invention comprises: a first shoulder belt portion that is provided at a seatbelt worn at a passenger seated in a seat of a vehicle and which is worn from a shoulder region of a first side of the passenger to a second side of a lumbar region of the passenger; a second shoulder belt portion that is provided at the seatbelt and which is worn from the shoulder region of the second side of the passenger to the first side of the lumbar region of the passenger; a lap belt portion that is provided at the seatbelt between the first shoulder belt portion and the second shoulder belt portion and which is worn at the lumbar region of the passenger from the first side to the second side; and a pair of lap anchors that support the seatbelt between the first shoulder belt portion and the lap belt portion and between the second shoulder belt portion and the lap belt portion, wherein, when the seatbelt is put on at the passenger, at least one of one end side of the seatbelt and another end side of the seatbelt is moved towards a position at which the seatbelt is worn at the passenger.

The seatbelt device of the sixth aspect of the present invention comprises: a first shoulder belt portion that is provided at a seatbelt worn at a passenger seated in a seat of a vehicle and which is worn from a shoulder region of a first side of the passenger to a second side of a lumbar region of the passenger; a second shoulder belt portion that is provided at the seatbelt and which is worn from the shoulder region of the second side of the passenger to the first side of the lumbar region of the passenger; a lap belt portion that is provided at the seatbelt between the first shoulder belt portion and the second shoulder belt portion and which is worn at the lumbar region of the passenger from the first side to the second side; and a pair of lap anchors that support the seatbelt between the first shoulder belt portion and the lap belt portion and between the second shoulder belt portion and the lap belt portion, wherein, when the wearing of the seatbelt at the passenger is released, at least one of one end side of the seatbelt and another end side of the seatbelt is moved towards a position forward of a position at which the seatbelt is worn at the passenger.

The vehicle of the present invention is provided with the seatbelt device of any one of the first through sixth aspects of the present invention.

### BRIEF DESCRIPTION OF THE DRAWINGS

FIG. 1 is a frontal drawing showing the main portions of the vehicle according to an embodiment of the present invention, as seen from the front of the vehicle;
FIG. 2 is a side drawing showing the main portions of the vehicle according to an embodiment of the present invention, as seen from the left side of the vehicle; and
FIG. 3 is a flowchart showing the control process for the seatbelt device according to an embodiment of the present invention.

### DETAILED DESCRIPTION OF THE INVENTION

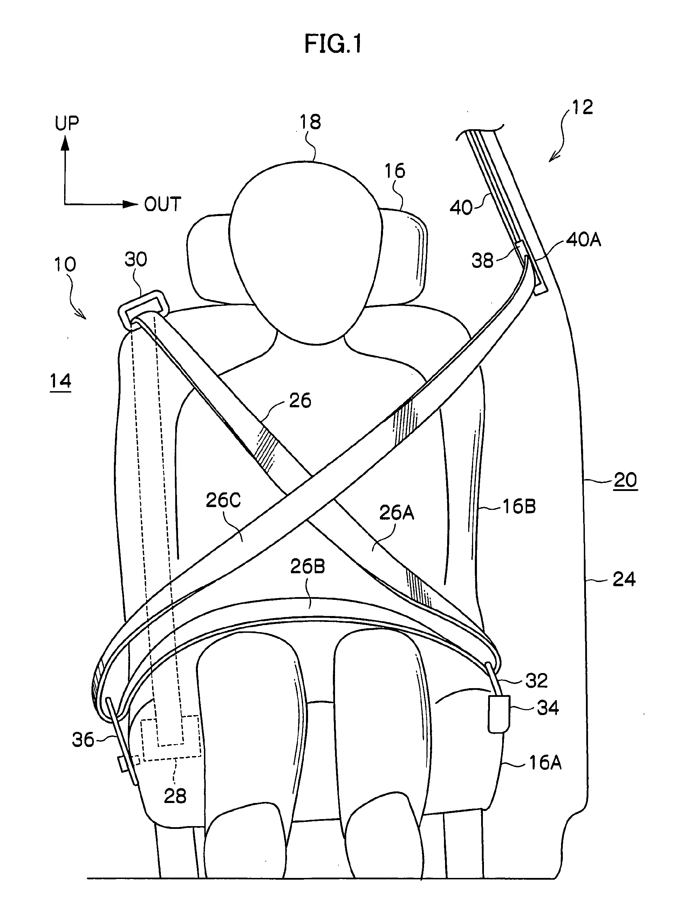

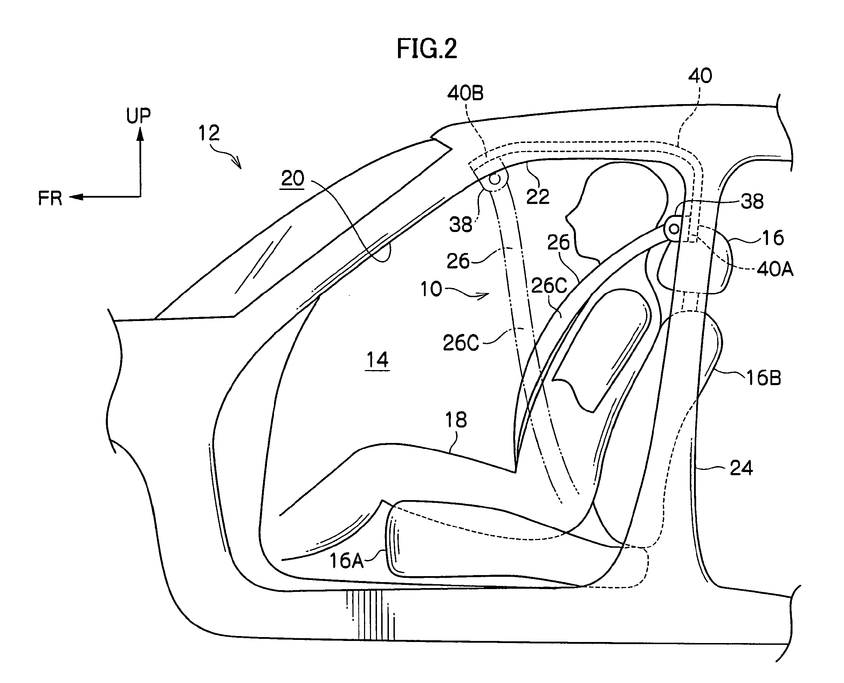

In FIG. 1, the main portions of a vehicle 12 configured so that a seatbelt device 10 according to an embodiment of the present invention has been applied is shown with a frontal drawing, as seen from the front of the vehicle. In FIG. 2, the main portions of the vehicle 12 are shown with a side drawing, as seen from the left side of the vehicle. Note that in the drawings, the front direction of the vehicle is indicated with a FR arrow, and the exterior in the vehicle widthwise direction is indicated with an OUT arrow, and the upper direction is indicated with an UP arrow.

With the vehicle 12 according to the present embodiment, a seat 16 is provided in a vehicle interior 14. A passenger 18 sits in the seat 16 facing towards the front direction of the vehicle. The seat 16 has a seat cushion 16A arranged substantially horizontally, and a seatback 16B made to stand from the end of the seat cushion 16A at the rear side of the vehicle. The seat cushion 16A supports in a state where it is arranged at the upper body of the passenger 18. The seatback 16B supports the upper body of the passenger 18 with a tilt towards the rear side of the vehicle.

An opening 20 is formed at the side wall of the vehicle body at the exterior side of the seat 16 in the widthwise direction of the vehicle. The opening 20 opens the interior of the vehicle interior 14. The opening 20 can be opened and closed due to the opening and closing of a side door (not shown). Further, a roof side rail 22 is provided at the vehicle body at the upper side of the opening 20. A pillar 24 (e.g., center pillar) is provided at the vehicle body at the opening 20 towards the rear side of the vehicle.

A seatbelt 26 of the seatbelt device 10 is worn at the passenger 18 seated in the seat 16.

One end side of the seatbelt 26 is taken up by a retractor 28. The retractor 28 is fixed at the inner side in the widthwise direction of the vehicle at the lower portion of the seat 16 (it can also be fixed at the vehicle body side). Due to this, the one end side of the seatbelt 26 is supported at the inner side in the widthwise direction of the vehicle at the lower portion of the seat 16.

A tension adjusting mechanism (not shown) is provided at the retractor 28. The tension adjusting mechanism adjusts the take-up or windup force of the seatbelt 26 to the retractor 28 with electric signals. The tension adjusting mechanism is designed to be able to adjust the tension of the seatbelt 26 between three levels of high, intermediate, and low (it can also be made to be adjustable between two levels or four or more levels, or in a non-step fashion). Also, in a state where the passenger 18 is wearing the seatbelt 26, the tension adjusting mechanism makes the tension of the seatbelt 26 low.

A pretensioner (not shown) is provided at the retractor 28. When the vehicle 12 is in an emergency (i.e., during collision or when anticipating a collision), the pretensioner operates. Due to this, the seatbelt 26 is taken up by the retractor 28 and the pretensioner is made so as to be able to increase the tension of the seatbelt 26.

The seatbelt 26 is movably inserted through a first shoulder anchor 30 (a shoulder inner anchor) that acts as a shoulder anchor. The first shoulder anchor 30 is fixed at the inner side of the widthwise direction of the vehicle at the upper portion of the seat 16 (at the upper portion of the seatback 16B, but it can also be fixed at the vehicle body side). For this reason, the seatbelt 26 is movably supported at the inner side in the widthwise direction of the vehicle at the upper portion of the seat 16. Due to this, the seatbelt 26 is arranged in the up and down directions between the retractor 28 and the first shoulder anchor 30.

The seatbelt 26 is movably inserted through a tongue 32 at another end side of the first shoulder anchor 30. The tongue 32 is attached to a lap outer anchor 34 (buckle) acting as a lap anchor, so as to be able to disengage from the lap outer anchor 34. The lap outer anchor 34 is fixed at the outer side in the widthwise direction of the vehicle at the lower portion of the seat 16 (seat cushion 16A, but it can also be fixed at the vehicle body side). For this reason, the seatbelt 26 is movably supported at the outer side in the widthwise direction of the vehicle at the lower portion of the seat 16. Due to this, the seatbelt 26 is made into a first shoulder belt portion 26A between the first shoulder anchor 30 and the tongue 32, and is worn at the passenger 18 from the shoulder portion at the inner side in the widthwise direction of the vehicle to the lumbar region at the outer side in the widthwise direction of the vehicle.

A wearing sensor (not shown) is provided at the lap outer anchor 34 as a wear detecting component. The wearing sensor is able to detect whether the tongue 32 is attached to or disengaged from the lap outer anchor 34.

The seatbelt 26 is movably inserted through a lap inner anchor 36 acting as a lap anchor at the another end side from the tongue 32. The lap inner anchor 36 is fixed at the inner side in the widthwise direction of the vehicle at the lower portion of the seat 16 (seat cushion 16A, but it can also be fixed at the vehicle body side). For this reason, the seatbelt 26 is movably supported at the outer side in the widthwise direction of the vehicle at the lower portion of the seat 16. Due to this, the seatbelt 26 is made into a lap belt portion 26B between the tongue 32 and the lap inner anchor 36 and is worn in the widthwise direction of the vehicle at the lumbar region of the passenger 18.

The another end of the seatbelt 26 (at the another end side from the lap inner anchor 36) is fixed to a second shoulder anchor 38 (shoulder outer anchor) that acts as a shoulder anchor. The second shoulder anchor 38 is supported by a slide rail 40 that acts as a guiding component at the outer side in the widthwise direction of the vehicle at the upper portion of the seat 16 (at the upper portion of the seatback 16B), so the seatbelt 26 is supported at the outer side in the widthwise direction of the vehicle of the upper portion of the seat 16. Due to this, the seatbelt 26 is made into a second shoulder belt portion 26C between the lap inner anchor 36 and the second shoulder anchor 38. The second shoulder belt portion 26C is worn from the shoulder region of the passenger 18 at the outer side in the widthwise direction of the vehicle to the lumbar region at the inner side in the widthwise direction of the vehicle in a state where it overlaps the first shoulder belt portion 26A at the side facing the front of the vehicle (i.e., the side facing away from the passenger 18).

The slide rail 40 is provided from the roof side rail 22 at the upper side of the opening 20 across to the upper portion of the pillar 24 towards the rear side of the vehicle at the opening 20 (but it can be provided only at the roof side rail 22 at the upper side of the opening 20). The end towards the rear side of the vehicle of the slide rail 40 is a fixed position 40A (wearing position). The end towards the front side of the vehicle of the slide rail 40 is a standby position 40B (released position). The second shoulder anchor 38 is supported (i.e., arranged) at the fixed position 40A of the slide rail 40. The second shoulder anchor 38 is electrically operated to be slidable (i.e., movable) along the slide rail 40. Due to this, the second shoulder anchor 38 can be supported (i.e., arranged) at the standby position 40B of the slide rail 40.

A fixed position sensor (not shown) is provided at the fixed position 40A of the slide rail 40 as a wearing position detecting component. The fixed position sensor can detect the placement and disengagement of the second shoulder anchor 38 relative to the fixed position 40A of the slide rail 40. A standby position sensor (not shown) is provided at the standby position 40B of the slide rail 40 as a released position detecting component. The standby position sensor can detect the placement and disengagement of the second shoulder anchor 38 relative to the standby position 40B of the slide rail 40.

Next, the operation of the present embodiment will be explained.

With the seatbelt device 10 configured as described above, when the passenger 18 takes a seat in the seat 16, the tongue 32 is attached to the lap outer anchor 34 and the second shoulder anchor 3 8 is arranged at the fixed position 40A of the slide rail 40. Due to this, the seatbelt 26 is applied to (i.e., worn at) the passenger 18. Further, the tension of the seatbelt 26 is made to be at the low level with the tension adjusting mechanism.

When the wearing sensor has detected that the tongue 32 has been removed from the lap outer anchor 34 by the passenger 18 (or when the side door has been opened by the passenger 18), the second shoulder anchor 38 slides along the slide rail 40 towards the standby position 40B of the slide rail 40. For this reason, the second shoulder belt portion 26C of the seatbelt 26 is moved towards the front side of the vehicle (i.e., a position forward of a position at which the seatbelt 26 is worn at the passenger 18).

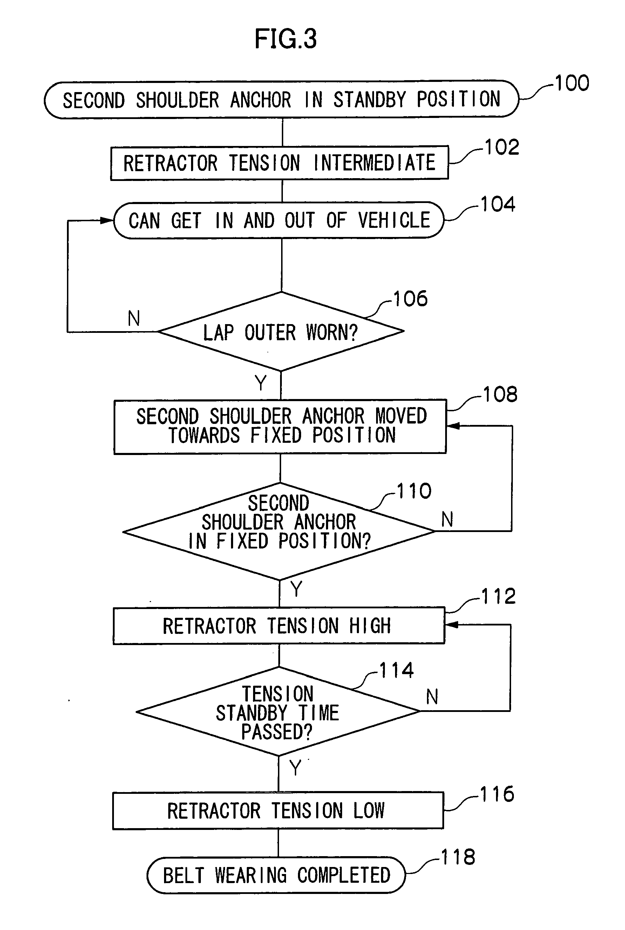

Further, as shown in FIG. 3, when the standby position sensor has detected at Step 100 that the second shoulder anchor 38 has been arranged at the standby position 40B of the slide rail 40 (or when the side door has been opened by the passenger 18), at Step 102, the tension of the seatbelt 26 is changed from the low level to the intermediate level by the tension adjusting mechanism. That is how the seatbelt 26 is taken up by the retractor 28 and the slack of the seatbelt 26 is reduced.

Due to this, at Step 104, the passenger 18 can easily get out of the seat 16 to the outer side in the widthwise direction of the vehicle. Accordingly, the passenger 18 can easily get out of the vehicle 12 through the opening 20.

Further, when the side door has been opened by the passenger 18 so that the passenger 18 can get into the vehicle 12 through the opening 20, and when the standby position sensor has detected that the second shoulder anchor 38 is disengaged from the standby position 40B of the slide rail 40, the second shoulder anchor 38 slides along the slide rail 40 to the standby position 40B of the slide rail 40. Accordingly, the second shoulder belt portion 26C of the seatbelt 26 is moved to the front side of the vehicle.

Furthermore, in this case, the tension of the seatbelt 26 is put at the intermediate level by the tension adjusting mechanism, so the seatbelt 26 is taken up by the retractor 28 and the slack of the seatbelt 26 decreases.

Due to this, at Step 104, the passenger 18 can easily take a seat in the seat 16 from the outer side in the widthwise direction of the vehicle, so the passenger 18 can easily get in the vehicle 12 through the opening 20.

Next, at Step 106, when the wearing sensor does not detect that the tongue 32 has been attached to the lap outer anchor 34 by the passenger 18, the state or condition in Step 104 continues.

On the other hand, if the wearing sensor has detected that the tongue 32 has been attached to the lap outer anchor 34 by the passenger 18, at Step 108, the second shoulder anchor 38 slides along the slide rail 40 from the standby position 40B of the slide rail 40 to the fixed position 40A. Accordingly, the second shoulder belt portion 26C of the seatbelt 26 is moved towards the rear of the vehicle.

After that, at Step 110, if the fixed position sensor does not detect that the second shoulder anchor 38 has been positioned at the fixed position 40A of the slide rail 40, the state continues and at Step 108, the second shoulder anchor 38 slides along the slide rail 40 to the fixed position 40A of the slide rail 40. Accordingly, the second shoulder belt portion 26C of the seatbelt 26 is moved towards the rear of the vehicle.

On the other hand, if at Step 110 the fixed position sensor has detected that the second shoulder anchor 38 has been positioned at the fixed position 40A of the slide rail 40, at Step 112, the tension of the seatbelt 26 is changed from the intermediate level to the high level by the tension adjusting mechanism. Accordingly, the seatbelt 26 is taken up by the retractor 28 and the slack of the seatbelt 26 caused by the movement of the second shoulder anchor 38 is reduced.

After that, at Step 114, if a preset time (i.e., tension standby time) has not elapsed from when the tension of the seatbelt 26 was changed from the intermediate level to the high level, the condition continues at Step 112, and the tension of the seatbelt 26 is continued to be the high level by the tension adjusting mechanism. Accordingly, the seatbelt 26 is wound up to the retractor 28 and the slack of the seatbelt 26 caused by the movement of the second shoulder anchor 38 is reduced.

If, however, at Step 114 the preset time (tension standby time) has elapsed from when the tension of the seatbelt 26 was changed from the intermediate level to the high level, at Step 116, the tension of the seatbelt 26 is changed from the high level to the low level by the tension adjusting mechanism. Accordingly, the feeling of pressure felt by the passenger 18 from seatbelt 26 is reduced.

With the above, the strapping in of the passenger 18 with the seatbelt 26 is completed.

Here, the lap belt portion 26B is provided at the seatbelt 26 between the first shoulder belt portion 26A and the second shoulder belt portion 26C. The seatbelt 26 between the first shoulder belt portion 26A and the lap belt portion 26B is supported by the lap outer anchor 34 via the tongue 32. The seatbelt 26 between the second shoulder belt portion 26C and the lap belt portion 26B is supported by the lap inner anchor 36. For this reason, the lap belt portion 26B does not receive tension towards the upper side from the seatbelt 26 at the intermediate portion in the longitudinal direction, and is positioned at the side lower than the lumbar region of the passenger 18 at both end portions in the longitudinal direction. Accordingly, movement of the lumbar region of the passenger 18 towards the upper side can be effectively suppressed by the lap belt portion 26B being worn securely at the lumbar region of the passenger 18 in a state in which tension is imparted to the lumbar region of the passenger 18 towards the lower side. Due to this, the restraining capability with regard to the lumbar region of the passenger 18 can be increased using a simple configuration. Further, there is only one lap belt portion 26B so the comfort of the passenger 18 is not sacrificed.

Furthermore, when the vehicle 12 is in an emergency, the pretensioner of the retractor 28 operates. Due to this, the seatbelt 26 is taken up by the retractor 28 and the tension of the seatbelt 26 is increased. For this reason, the ability to restrain the passenger 18 is increased.

Further, the support of the seatbelt 26 by the lap outer anchor 34 can be released by the passenger 18 removing the tongue 32 from the lap outer anchor 34. Furthermore, when the tongue 32 has been removed from the lap outer anchor 34 by the passenger 18, the second shoulder anchor 38 automatically slides to the standby position 40B of the slide rail 40 and the second shoulder belt portion 26C of the seatbelt 26 moves to the front side of the vehicle. Accordingly, the passenger 18 can easily operate the release of the seatbelt 26. In addition, the passenger 18 can easily get out of the seat 16 towards the outer side in the widthwise direction of the vehicle, and can easily get in the seat 16 from the outer side in the widthwise direction of the vehicle. Due to this, the passenger 18 can easily get into and out of the vehicle 12 through the opening 20.

Furthermore, the second shoulder anchor 3 8 automatically slides to the fixed position 40A of the slide rail 40 when the tongue 32 has been attached to the lap outer anchor 34 by the passenger 18, and then the second shoulder belt portion 26C of the seatbelt 26 moves towards the rear side of the vehicle. Also, the tension of the seatbelt 26 is adjusted automatically. Due to this, the application of the seatbelt 26 to the passenger 18 is completed so the operation of wearing the seatbelt 26 can be easily performed by the passenger 18.

Note that the present exemplary embodiment can also be configured so that, when anticipating a collision of the vehicle 12, the passenger 18 is alerted by body sensory information due to the tension of the seatbelt 26 being changed by the tension adjusting mechanism of the retractor 28. In this case, the tension that changes especially is that of the first shoulder belt portion 26A that touches the chest portion of the passenger 18, so body sensory information can be conveyed to the passenger 18 effectively.

Also, with the present exemplary embodiment, the device is configured so that the pretensioner is provided at the retractor 28. Nonetheless, the configuration can be made so that a pretensioner is provided to at least one of the retractor 28, the first shoulder anchor 30, the lap outer anchor 34, the lap inner anchor 36, and the second shoulder anchor 38. The pretensioner can also be configured to make the retractor 28 (where the pulling out of the seatbelt 26 is locked), the first shoulder anchor 30, the lap outer anchor 34, the lap inner anchor 36, or the second shoulder anchor 38 move in the direction where the tension of the seatbelt 26 is increased when the vehicle 12 is in an emergency. Further, in a case where the pretensioner is provided at the retractor 28 and the lap inner anchor 36, the tension of the seatbelt 26 can effectively be made to increase at all of the first shoulder belt portion 26A, the second shoulder belt portion 26C, and the lap belt portion 26B. For this reason, the capability to restrain the passenger 18 can be effectively raised.

Furthermore, with the present exemplary embodiment, the configuration is such where the one end side of the seatbelt 26 is supported by the retractor 28. Nonetheless, the configuration can be made so that the retractor 28 supports at least one of the one end side of the seatbelt 26 and the another end side thereof.

Further, with the present exemplary embodiment, the configuration is such that the second shoulder anchor 38 is slidable along the slide rail 40. However, the configuration needs only to be such where at least one of the first shoulder anchor 30 and the second shoulder anchor 38 is movable along the slide rail 40.

Further, with the present exemplary embodiment, the configuration is such where the support by the lap outer anchor 34 of the seatbelt 26 can be released. However, the configuration needs only to be such where the support by at least one of the lap outer anchor 34 and the lap inner anchor 36 of the seatbelt 26 can be released.

## Claims

1. A seatbelt device comprising:
a first shoulder belt portion that is provided at a seatbelt worn at a passenger seated in a seat of a vehicle and which is worn from a shoulder region of a first side of the passenger to a second side of a lumbar region of the passenger;
a second shoulder belt portion that is provided at the seatbelt and which is worn from the shoulder region of the second side of the passenger to the first side of the lumbar region of the passenger;
a lap belt portion that is provided at the seatbelt between the first shoulder belt portion and the second shoulder belt portion and which is worn at the lumbar region of the passenger from the first side to the second side; and
a pair of lap anchors that support the seatbelt between the first shoulder belt portion and the lap belt portion and between the second shoulder belt portion and the lap belt portion.

2. The seatbelt device of claim 1, wherein the support of the seatbelt by at least one of the pair of lap anchors is releasable.

3. The seatbelt device of claim 1 or 2, wherein a pretensioner is provided at at least one of one end side of the seatbelt and the lap anchor at another end side of the seatbelt, such that the tension of the seatbelt can be increased.

4. The seatbelt device of any one of claims 1 - 3, wherein at least one of one end side of the seatbelt and another end side of the seatbelt is movable towards a position forward of a position at which the seatbelt is worn at the passenger.

5. The seatbelt device of any one of claims 1 - 4, further provided with a tension adjusting mechanism that can adjust the tension of the seatbelt.

6. The seatbelt device of claim 5, wherein the tension adjusting mechanism decreases the tension of the seatbelt when the seatbelt is put on at the passenger.

7. The seatbelt device of claim 5 or 6, wherein, when the wearing of the seatbelt at the passenger is released, the tension adjusting mechanism increases the tension of the seatbelt.

8. A seatbelt device comprising:
a first shoulder belt portion that is provided at a seatbelt worn at a passenger seated in a seat of a vehicle and which is worn from a shoulder region of a first side of the passenger to a second side of a lumbar region of the passenger;
a second shoulder belt portion that is provided at the seatbelt and which is worn from the shoulder region of the second side of the passenger to the first side of the lumbar region of the passenger;
a lap belt portion that is provided at the seatbelt between the first shoulder belt portion and the second shoulder belt portion and which is worn at the lumbar region of the passenger from the first side to the second side; and
a pair of lap anchors that support the seatbelt between the first shoulder belt portion and the lap belt portion and between the second shoulder belt portion and the lap belt portion,
wherein, when the seatbelt is put on at the passenger, at least one of one end side of the seatbelt and another end side of the seatbelt is moved towards a position at which the seatbelt is worn at the passenger.

9. The seatbelt device of claim 8, wherein the lap anchor is caused to support the seatbelt when the seatbelt is put on at the passenger.

10. The seatbelt device of claim 9, wherein the at least one of the one end side and the another end side of the seatbelt is moved towards the position at which the seatbelt is worn at the passenger when the lap anchor has been caused to support the seatbelt.

11. The seatbelt device of any one of claims 8 -10, wherein the tension of the seatbelt increases when the seatbelt is put on at the passenger.

12. The seatbelt device of claim 11, wherein the tension of the seatbelt increases when the movement of the at least one of the one end side and the another end side of the seatbelt towards the position at which the seatbelt is worn at the passenger has finished.

13. The seatbelt device of any one of claims 8-12, wherein the tension of the seatbelt decreases when the seatbelt has been put on at the passenger.

14. The seatbelt device of claim 13, wherein the tension of the seatbelt decreases when a preset amount of time has elapsed since the movement of the at least one of the one end side and the another end side of the seatbelt towards the position at which the seatbelt is worn at the passenger has finished.

15. A seatbelt device comprising:
a first shoulder belt portion that is provided at a seatbelt worn at a passenger seated in a seat of a vehicle and which is worn from a shoulder region of a first side of the passenger to a second side of a lumbar region of the passenger;
a second shoulder belt portion that is provided at the seatbelt and which is worn from the shoulder region of the second side of the passenger to the first side of the lumbar region of the passenger;
a lap belt portion that is provided at the seatbelt between the first shoulder belt portion and the second shoulder belt portion and which is worn at the lumbar region of the passenger from the first side to the second side; and
a pair of lap anchors that support the seatbelt between the first shoulder belt portion and the lap belt portion and between the second shoulder belt portion and the lap belt portion,
wherein, when the wearing of the seatbelt at the passenger is released, at least one of one end side of the seatbelt and another end side of the seatbelt is moved towards a position forward of a position at which the seatbelt is worn at the passenger.

16. The seatbelt device of claim 15, wherein the support of the seatbelt by the lap anchor is released when the wearing of the seatbelt at the passenger is released.

17. The seatbelt device of claim 16, wherein, when the support of the seatbelt by the lap anchor has been released, the at least one of the one end side of the seatbelt and the another end side of the seatbelt is moved towards the position forward of the position at which the seatbelt is worn at the passenger.

18. The seatbelt device of claim 14, wherein the tension of the seatbelt is increased when the wearing of the seatbelt at the passenger is released.

19. The seatbelt device of any one of claims 15-18, wherein the tension of the seatbelt is increased when the movement of the at least one of the one end side of the seatbelt and the another end side of the seatbelt towards the position forward of the position at which the seatbelt is worn at the passenger has finished.

20. A vehicle provided with the seatbelt device of any one of claims 1-19.
